(19) Europäisches Patentamt
European Patent Office
Office européen des brevets

(11) EP 4 339 837 A1

(12) **EUROPEAN PATENT APPLICATION**

(43) Date of publication:
**20.03.2024 Bulletin 2024/12**

(21) Application number: **22195822.6**

(22) Date of filing: **15.09.2022**

(51) International Patent Classification (IPC):
**G06N 3/045** (2023.01)          **G06N 3/048** (2023.01)
**G06N 3/09** (2023.01)

(52) Cooperative Patent Classification (CPC):
**G06N 3/045; G06N 3/09;** G06N 3/048

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Healthineers AG
91301 Forchheim (DE)**

(72) Inventors:
• **Hümmer, Christian
96215 Lichtenfels (DE)**

• **Biniazan, Ramyar
90402 Nürnberg (DE)**
• **Datar, Manasi
99084 Erfurt (DE)**
• **Fieselmann, Andreas
91052 Erlangen (DE)**

(74) Representative: **Siemens Healthineers
Patent Attorneys
Siemens Healthcare GmbH
SHS TE IP
Henkestraße 127
91052 Erlangen (DE)**

(54) **MULTI-TASK MACHINE LEARNING NETWORK**

(57)    The invention describes a multi-task machine learning network (1) comprising a plurality of sub-networks (N1, N2, N3, N4), each sub-network (N1, N2, N3, N4) having a number of output nodes (ON) and input nodes (IN), wherein there is a general input (GI) providing input data (D) and the input nodes (IN) of at least a first sub-network (N1) and a second sub-network (N2) are connected to this general input (GI), and wherein an output-node (ON) of the first sub-network (N1) is connected with an input-node (IN) of the second sub-network (N2).

The invention further describes a training method for such a network as well as a medical system.

FIG 3

**Description**

The invention describes a multi-task (stacked) machine learning network, a method for training such multi-task machine learning network and a medical system comprising such network. Especially this invention describes multi-task stacked neural networks for end-to-end image analytics.

Image analytics based on deep learning is an important discipline of computer vision, see e.g., the recent overview articles of Wang et al. ("Medical Image Segmentation Using Deep Learning: A survey"; https://arxiv.org/pdf/2009.13120. pdf) or Minaee et al. ("Image Segmentation Using Deep Learning: A Survey"; https://arxiv.org/pdf/2001.05566.pdf). A prominent area of deep learning research is multi-task learning, where multiple learning tasks are solved simultaneously by leveraging useful information between them (e.g. S. Ruder "An Overview of Multi-Task Learning in Deep Neural Networks"; https://arxiv.org/abs/1706.05098). A well-known challenge of this concept is task balancing, which refers to the weighting of individual tasks for ensuring that every task is solved with sufficient quality (e.g. Lin et al. "A Closer Look at Loss Weighting in Multitask Learning"; https://arxiv.org/pdf/2111.10603.pdf).

Prior art for the segmentation of multiple landmarks using deep learning can be categorized as follows:

1) Independent single-task landmark segmentation A dedicated segmentation algorithm is trained for every landmark independently. This comes at the cost of multiple trainings and a potential redundancy in the parameter space.

2) Instance segmentation (e.g. Haviz et al. "A Survey on Instance Segmentation: State of the art"; https://arxiv.org/abs/2007.00047) pertains to a combination of object detection and semantic segmentation to jointly

- determine bounding boxes and classes of various objects
- perform segmentation inside the bounding boxes However, recent scientific literature reports many unsolved technical challenges of instance segmentation, see, e.g., Table 3 in the disclosure of Haviz.

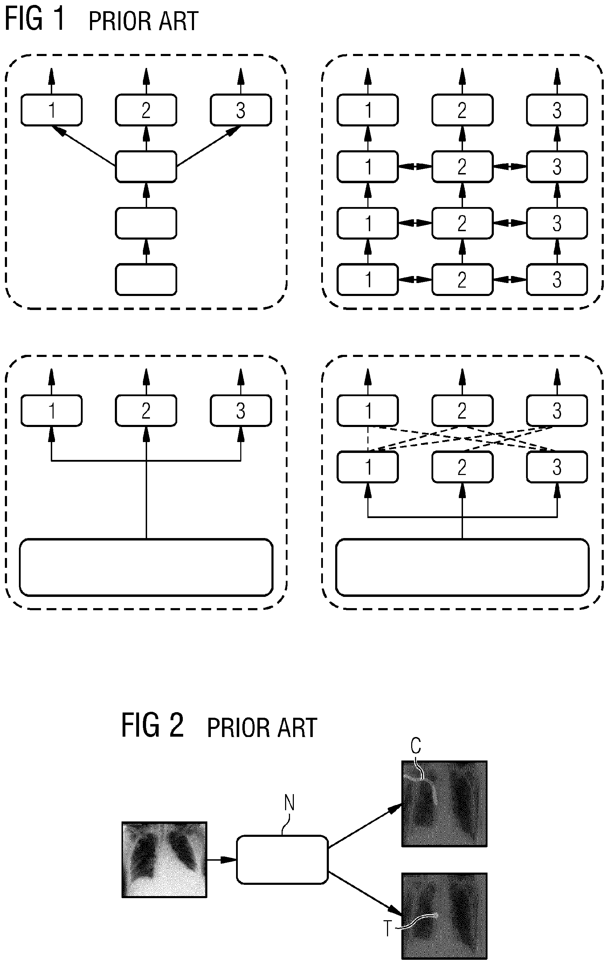

3) Multi-task learning is described e.g. by Vandenhende et al. ("Multi-Task Learning for Dense Prediction Tasks: A Survey "; https://arxiv.org/abs/2004.13379), who gives an overview focusing on multi-task network architectures. A categorization of multi-task model topologies in shown in Figure 1 and described below.

The problem of all known networks is the issue of task balancing and optimizing training and the solving of different tasks.

It is the object of the present invention to improve the known systems and methods to facilitate an improvement in multi-task machine learning networks and their training.

This object is solved by a multi-task machine learning network according to claim 1, a method according to claim 7 and a medical system according to claim 12.

The aim of this invention is to mitigate the problem of task balancing by exploiting (stacked) neural network architectures, which sequentially solve individual tasks by exploiting prior information from previous tasks.

A multi-task (stacked) machine learning network according to the invention comprises a plurality of sub-networks, at least two, but preferably at least three. Each sub-network has a number of output nodes and input nodes, wherein there is a general input providing input data and the input nodes of at least a first sub-network and a second sub-network are connected to this general input. It is important that an output-node of the first sub-network is connected with an input-node of the second sub-network.

The invention does not depend on the type of the sub-networks. Suitable sub-networks are well known in the state of the art and used in multi-task learning. In general, every single-task network could be used as sub-network for the invention. Sub-networks could have an identical architecture (and be trained to solve different tasks) or they could have different architectures.

Important for the invention are the special data connections and the special connection of input nodes and output nodes of the sub-networks.

The first important feature is the general input, wherein the input nodes of the sub-networks (at least of two sub-networks) are connected to this general input. This could be achieved by connecting input nodes of the sub-networks to the same data input or to use a general input node as input for all sub-networks.

It should be noted that the expression "general input" means that the sub-networks work with a common input object, e.g. an image. In the case of an image, the case could occur that some sub-networks work with a reconstructed image and some sub-networks with raw-data of this image, but the work of the sub-networks must always be based on the same object (e.g. image). Thus, the general input could have different data channels where different types of data of the object is inputted, but all of this data must be derived from the same object (e.g. an image). However, it is preferred that the respective input nodes of the sub-networks are receiving the same input data from the general input.

It should be noted that although image data is a preferred case for input data, the special network architecture is also advantageous for applications beyond image analytics, such as treatment/response or survival prediction. Thus, preferred input data is also patient data, medical data of treatments of a patient, data of diagnoses or combined data, e.g. a combination of imaging and non-imaging data.

For the invention it is important that an output-node of the first sub-network is connected with an input-node of the second sub-network. In the case there are more sub-networks it is preferred that input nodes of all sub-networks, but the first sub-network, are connected to output nodes of other sub-networks. It is particularly preferred that the sub-networks are connected in form of a directed, acyclic graph, i.e. there are no cycles of data connections of sub-networks.

It should be noted that for the invention it is often sufficient to use external data from the general input, only, wherein "external data" is data not produced by the sub-networks of the multi-task machine learning network. However, it is possible, that any of the sub-networks may use additional external data as input. Thus, any of the sub-networks might also have other prior information as an independent input.

It should also be noted that input data or data send from an output node to an input node may be processed before inputting it into a sub-network. for example, there may be a preprocessing, post-processing and/or a dimension reduction or aggregation or any restructuring process to make the data compliant with the following sub-network. Preferably, a sigmoid activation is used at the output of a sub-network to reduce the gradient produced by a loss in this sub-network.

A method for training a multi-task machine learning network according to the invention uses a plurality of training datasets and comprises the following steps:

- training the first sub-network by inputting a first training dataset into the first sub-network and adapting parameters of the first sub-network according to a ground truth of the first training dataset,
- training the second sub-network by inputting the first training dataset and an output of the first sub-network into the second sub-network and adapting parameters of the second sub-network according to a ground truth of the first training dataset,

wherein these training steps are performed simultaneously in the course of multi-task machine learning,

- repeating the training steps with other training datasets.

It should be noted that especially in an end-to-end training, parameter adaptation (i.e. optimization) for each subnetwork would not be separated in individual steps. There would rather be a combined loss function (see below) and sub-network parameters would be adapted in one joint backward pass.

It should be noted that the sub-networks are initially not trained (or not optimally trained) so that in the beginning the outputs of the sub-networks are not optimal as input for other sub-networks. However, this issue is not crucial, when the training is performed end-to-end for the complete network (what is a preferred feature). Individual sub-network parameters are preferably optimized over iterations via stacked loss functions where the loss for the first task (solved by the first sub-network) depends only on the parameters of the first sub-network, while the loss for the second task (solved by the second sub-network) depends on the parameters of the first and the second sub-networks and so on. Even if the first sub-network is not trained at the beginning, its output will still be used as input to the second sub-network, resulting in a high initial loss value. This will generate larger gradients in the backward pass, leading to a large correction in the network weights to optimize the loss in subsequent iterations.

The architecture according to the invention is expected to learn from the interdependence of tasks, rather than treat each individual task in isolation.

Thus, the fundamental idea of the (stacked) network architecture for multi-task learning is solving a first task by using input data (e.g. an input image) received from the general input and solving a second task using the input data and the results of the first task as prior information. Then, a third task could be solved using the input image and the results of the first and/or second task as prior information and so on. The tasks are solved by individual sub-networks that are trained to solve "their" task. The training should preferably be performed parallel as described above.

The invention has the advantage that in the sequential structure of sub-networks it is possible to inform later tasks (subsequent sub-networks) with more prior information about previous tasks. This additional information simplifies more complicated tasks in a later stage of the (stacked) network architecture and especially has the following additional advantages:

- The stacked network architecture can be trained in an end-to-end fashion,
- more complicated tasks (in later network stage) benefit from additional prior information,
- the task balancing problem can be mitigated by design.

It should be noted that although there is a certain order, which results of which sub-networks are needed by other sub-networks, the training of all sub-networks is done simultaneously and not sequentially. To this end, each of the tasks is "solved" using an independent network architecture with well-defined inputs and outputs. As such, these individual networks can be moved around and connected in an arbitrary order (at least before training). This enables an easy reconfiguration of the stacked network based on changes in workflow and/or expected final output. Of course, it is important that the well-defined inputs and outputs of every subnetwork (e.g., network for A: task1-task2-task3) are consistent for training and inference. It should be noted that such a change should only be triggered by a change in workflow and/or expected output. The outputs of the networks could be adapted to the need of the input of the following sub-network.

A medical system according to the invention comprises a multi-task machine learning network according to the invention, wherein this network is trained by a method according to the invention. Such medical system is preferably an X-ray system/tomography system, especially a mammography system, an MRI-System, an ultrasound system or a diagnosis system.

Some units or modules of the multi-task machine learning network mentioned above can be completely or partially realized as software modules running on a processor of a computing system. A realization largely in the form of software modules can have the advantage that applications already installed on an existing system can be updated, with relatively little effort, to install and run these units of the present application. The object of the invention is also achieved by a computer program product with a computer program that is directly loadable into the memory of a computing system, e.g. of a control device of a medical imaging system, and which comprises program units to perform the steps of the inventive method when the program is executed by the computing system. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of a computing system. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

A preferred multi-task machine learning network comprises a third sub-network, wherein the input node of the third sub-network is connected to the general input, and wherein an output-node of the first sub-network and/or the second sub-network is connected with an input-node of the third sub-network.

A preferred multi-task machine learning network comprises a fourth sub-network, wherein the input node of the fourth sub-network is connected to the general input, and wherein an output-node of the first sub-network and/or the second sub-network and/or the third sub-network is connected with an input-node of the fourth sub-network.

Further sub-networks could preferably be included in a similar way in that their input nodes are connected to output nodes of other sub-networks in a way that there is no cyclic data-connection between the sub-networks. It is clear that a "connection" between sub-networks means that output data of a sub-network is received by an input node of another sub-network.

According to a preferred multi-task machine learning network at least a number of the sub-networks is designed for image analytics, treatment/response, survival prediction, or diagnostics, preferably wherein the general input is designed for receiving image data and/or patient data. The general input may be adapted to receive one single data word, a data-vector or a data-array or a combination of such data.

A preferred multi-task machine learning network is adapted for processing images in mammography, especially for categorizing mammographic breast density. It is preferred that

- the first sub-network is designed to segment a breast from background,
- the second sub-network is designed to segment compressed and periphery area,
- especially a third sub-network is designed to segment important landmarks, especially pectoralis, nipple, and/or inframammary fold,
- especially fourth sub-network is designed to segment fibro-glandular tissue in a mammogram,
- especially a further sub-network is designed to assign a breast density category which uses the outputs of a number, especially of all, previous sub-networks.

A preferred multi-task machine learning network is adapted for processing an input image of a catheter inside a body and localizing a catheter tip. It is preferred that

- the first sub-network is designed to segment a catheter course,
- the second sub-network is designed to exploit the segmented catheter course and the input image to segment the catheter tip.

According to a preferred multi-task machine learning network, the complexity of tasks solved by the sub-networks is different and the sub-networks are arranged such that the first sub-network solves the least complex task and the second sub-network solves the task with the second least complexity. It is preferred that following sub-networks are arranged in ascending order regarding their complexity. Thus, sub-networks solving complex tasks can be aided by results of other sub-networks solving less complex tasks.

A preferred method comprises the additional step:

- training a third sub-network by inputting the first training dataset and an output of the first sub-network and/or the second sub-network into the third sub-network and adapting parameters of the third sub-network according to a ground truth of the first training dataset,

and preferably

- training a fourth sub-network by inputting the first training dataset and an output of the first sub-network and/or the second sub-network and/or the third sub-network into the fourth sub-network and adapting parameters of the fourth sub-network according to a ground truth of the first training dataset.

As already said above while describing the general training, these training steps are performed simultaneously in the course of multi-task machine learning. They are only explained here as different steps to better describe what information is provided for training for every used sub-network.

According to a preferred method, sub-networks are trained by using imaging data, non-imaging data or a combination of imaging data and non-imaging data as training datasets, especially mammography data or images of a catheter inside a body.

According to a preferred method, for a combination of two sub-networks the training is based on a loss function of the form $L_{total} = L_1(W_1) + L_2(W_1, W_2)$, with sets of network parameters W and segmentation losses L.

According to a preferred method, for a combination of three sub-networks the training is based on a loss function of the form $L_{total} = L_1(W_1) + L_2(W_1, W_2) + L_3(W_1, W_2, W_3)$, with sets of network parameters W and segmentation losses L.

According to a preferred method, for a combination of four sub-networks the training is based on a loss function of the form $L_{total} = L_1(W_1) + L_2(W_1, W_2) + L_3(W_1, W_2, W_3) + L_4(W_1, W_2, W_3, W_4)$, with sets of network parameters W and segmentation losses L. In the case an output node of a sub-network is not connected with the input node of sub-networks 3 or 4, the contribution of the respective sub-network is not regarded in the loss function. Thus, when e.g. output nodes of sub-networks 2 and 3 are not connected with an input node of sub-network 4, the Loss function would result in

$$L_{total} = L_1(W_1) + L_2(W_1, W_2) + L_3(W_1, W_2, W_3) + L_4(W_1, W_4).$$

In a preferred embodiment of the invention, components of the multi-task machine learning network are part of a data-network, wherein preferably the data-network and a medical imaging system (i.e. the magnetic resonance imaging system which provides image data) are in data-communication with each other, wherein the data-network preferably comprises parts of the internet and/or a cloud-based computing system, wherein preferably the multi-task machine learning network according to the invention or a number of its components is realized in this cloud-based computing system. For example, these components are part of a data-network, wherein preferably the data-network and a medical imaging system which provides the image data are in communication with each other. Such a networked solution could be implemented via an internet platform and/or in a cloud-based computing system.

The method may also include elements of "cloud computing". In the technical field of "cloud computing", an IT infrastructure is provided over a data-network, e.g. a storage space or processing power and/or application software. The communication between the user and the "cloud" is achieved by means of data interfaces and/or data transmission protocols.

In the context of "cloud computing", in a preferred embodiment of the method according to the invention, provision of data via a data channel (for example a data-network) to a "cloud" takes place. This "cloud" includes a (remote) computing system, e.g. a computer cluster that typically does not include the user's local machine. This cloud can be made available in particular by the medical facility, which also provides the medical imaging systems. In particular, the image acquisition data is sent to a (remote) computer system (the "cloud") via a RIS (Radiology Information System) or a PACS (Picture Archiving and Communication System).

Within the scope of a preferred embodiment of the invention, the sub-networks are present on the "cloud" side. A preferred embodiment further comprises, a local computing unit connected to the system via a data channel (e.g. a data-network, particularly configured as RIS or PACS). The local computing unit includes at least one data receiving interface to receive data. Moreover, it is preferred if the local computer additionally has a transmission interface in order to send data to the system.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 shows a categorization of multi-task neural network architectures according to the prior art.

Figure 2 shows the determination of the catheter course and tip segmentation on chest X-ray images according to the prior art.

Figure 3 shows an example for a multi-task machine learning network according to the invention.

Figure 4 shows a block diagram of the process flow of a preferred method according to the invention.

Figure 5 shows the determination of the catheter course and tip segmentation on chest X-ray images according to the invention.

Figure 6 shows the processing of mammography X-ray images according to the invention.

In the diagrams, like numbers refer to like objects throughout.

Figure 1 shows a categorization of multi-task neural network architectures of the prior art by means of parameter sharing.

In the upper left side, a network based on hard parameter sharing is shown, in the upper right a network based on soft parameter sharing, on the bottom left an encoder forced model (the big box is the encoder) and on the bottom right a decoder forced model (the big box is the decoder). The numbers in the small boxes indicate different networks, especially different types of networks, for solving different tasks.

Figure 2 shows the determination of the catheter course C and tip T segmentation on chest X-ray images according to the prior art.

Identification of catheter mispositioning is an important clinical question and has become of increasing interest in the deep learning literature in recent years. For instance, the RANZCR CliP - Catheter and Line Position Challenge 2021 provided a dataset with images and annotations of line/tube courses and positioning quality. The best-performing system of this challenge is exploiting a state-of-the-art multi-task learning technique. In this figure, a single encoder-decoder neural network N simultaneously segments catheter Course C and tip T as schematically illustrated here. To this end, catheter course C and tip T are represented as two output feature maps of the same neural network N.

One challenge arising with the concept shown in this figure is that a dedicated balancing between the task is needed inside the cost function for network training:

$$L_{total} = c_1 L_1(W) + c_2 L_2(W),$$

with W being set of network parameters, L segmentation losses and c task-specific weights. It is well-known that loss balancing is especially challenging for tasks with very different properties, like the segmentation of elongated structures and points as depicted in the figure. This leads to high optimization efforts in optimally configuring the task-specific weights c and gains a lot of interest in scientific literature.

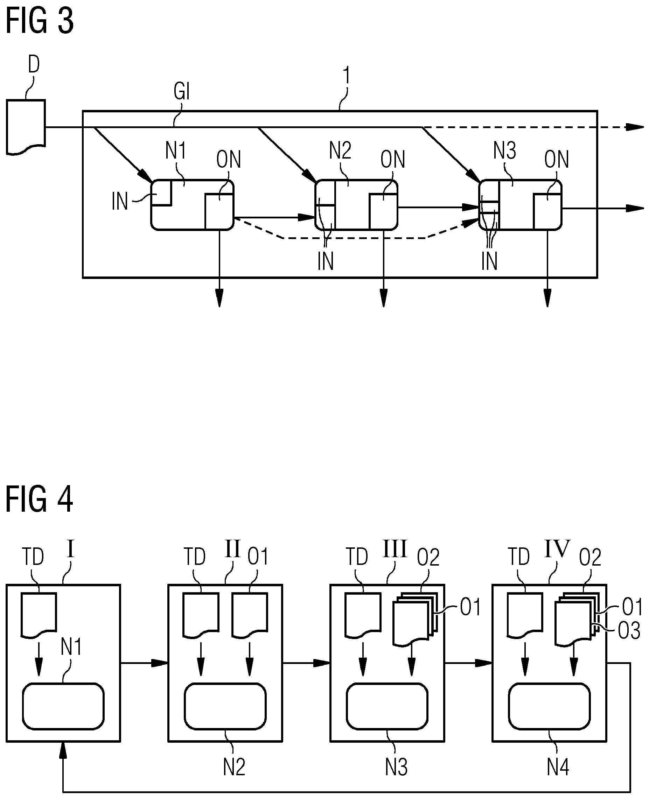

Figure 3 shows an example for a multi-task machine learning network 1 according to the invention. This multi-task machine learning network 1 comprises a plurality of sub-networks N1, N2, N3, having a number of output nodes ON and input nodes IN. There is a general input GI providing input data D, e.g. image data D. The input nodes IN of the three sub-networks N1, N2, N3 are connected to this general input GI to receive the input data. An output-node ON of the first sub-network N1 is connected with an input-node IN of the second sub-network N2 and possibly to the input-node IN of the third sub-network N3 (dashed arrow). An output-node ON of the second sub-network N2 is connected with an input node IN of the third sub-network N3.

The results of the sub-networks N1, N2, N3 (vertical arrows) as well as the input data D (dashed arrow) are in this example outputted for a user.

The multi-task machine learning network 1 could comprise more sub-networks that use input data D and results of preceding sub-networks N1, N2, N3.

Figure 4 shows a block diagram of the process flow of a preferred method for training a multi-task machine learning network 1 according to figure 3, but with four sub-networks N1, N2, N3, N4 with a plurality of training datasets TD.

It should be noted that the following training steps should be performed simultaneously in the course of multi-task machine learning. They are only explained here as different steps to better describe what information is provided for training for every used sub-network. Especially in an end-to-end training, parameter adaptation for each subnetwork would not be separated in individual steps. There would rather be a combined loss function and sub-network parameters would be adapted in one joint backward pass.

In step I, the first sub-network N1 is trained by inputting a training dataset TD into the first sub-network N1 and adapting parameters of the first sub-network N1 according to a ground truth of the training dataset TD.

In step II, the second sub-network N2 is trained by inputting the training dataset TD and an output of the first sub-network N1 into the second sub-network N2 and adapting parameters of the second sub-network N2 according to a ground truth of the training dataset TD.

In step III, the third sub-network N3 is trained by inputting the training dataset TD and an output of the first sub-network N1 and the second sub-network N2 into the third sub-network N3 and adapting parameters of the third sub-network N3 according to a ground truth of the training dataset TD.

In step IV, the fourth sub-network N4 is trained by inputting the training dataset TD and an output of the first sub-network N1, the second sub-network N2 and the third sub-network N3 into the fourth sub-network N4 and adapting parameters of the fourth sub-network N4 according to a ground truth of the training dataset TD.

These steps are repeated with all training datasets TD.

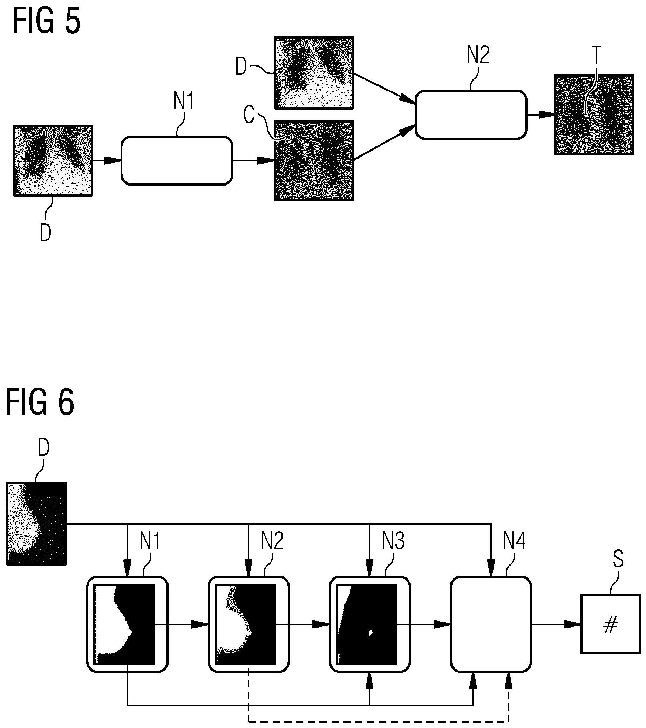

Figure 5 shows the determination of the catheter course C and tip T segmentation on chest X-ray images according to the invention. In contrast to figure 2, a multi-task machine learning network 1 comprising two sub-networks N1, N2 trained as shown in figure 4 (only two steps for the two sub-networks N1, N2) is used to accomplish the task.

Based on an image as input data D, the catheter course C is determined by the first sub-network N1. This catheter course C together with the input data D (shown here a second time) is inputted into the second sub-network N1 that determines the tip T.

Thus, the stacked neural network architecture has split both tasks in a sequential order. The first sub-network N1 segments the catheter course C and the second sub-network exploits the segmented catheter course C and the input image D to segment the catheter tip T. The advantage of this stacked architecture is that the parameters of the second sub-network N2 can be specific for the tip T segmentation and trained independently of the loss for course segmentation

$$L_{total} = L_1(W_1) + L_2(W_1, W_2),$$

with $L_1$ as loss for catheter course C segmentation, $L_2$ as loss for tip T segmentation, and with $W_1$ and $W_2$ as parameters of sub-network N1 and sub-network N2, respectively. Note that loss $L_2$ for tip T segmentation depends on the parameters of both sub-networks N1, N2, but that the impact on the first sub-network N1 is negligible during training: On the one hand, a sigmoid activation at the output of the first sub-network N1 can be used to reduce the gradient produced by loss $L_2$ in the first sub-network N1. On the other hand, the segmentation of elongated structures comprises a much higher residual error compared to the segmentation of point landmarks.

Comparing the concepts of figures 2 and 5, the stacked neural network architecture achieves a higher tip T detection accuracy at a significantly more stable training convergence and reduces optimization effort (no loss weights for task balancing).

Figure 6 shows the processing of mammography X-ray images according to the invention. A multi-task machine learning network 1 comprising four sub-networks N1, N2, N3, N4 trained as shown in figure 4 is used to accomplish the task of breast density classification in Mammography images.

Scoring mammographic breast density is another important clinical question which can be assessed by using the concept of the invention. The stacked neural network architecture is used for breast density classification task (ACR BI-RADS a/b/c/d) in this example, where the first sub-network N1 is used to only segment the breast shown in the input image D from background. The second sub-network N2 is used to segment compressed and periphery area and third sub-network N3 is used to segment important landmarks such as pectoralis, nipple, and inframammary fold. Based on the input image D and the results of all preceding sub-networks N1, N2, N3, a fourth sub-network N4 could segment the fibro-glandular tissue (FGT) in the mammogram. Finally, based on the input image D and the results of all preceding sub-networks N1, N2, N3 N4, a further sub-network (not shown for clarity) determines a breast density score S.

The advantage of this approach is that the segmentation of the FGT (fourth sub-network N4) can use the previous segmentation results and the input image D to create a more robust dense tissue segmentation. Generally, the area of FGT visible in the mammogram has a high impact on the visual rating of breast density. Note that the order of the sub-networks N1, N2, N3, N4 follows the intrinsic complexity of the segmentation tasks: the less difficult task (segmentation of the breast) comes first, the most difficult task (segmentation of the FGT), benefiting most from the previous segmentation results, comes last. The computation of the score itself is not very complex, but needs the results of the other sub-networks N1, N2, N3, N4.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The mention of a "unit" or a "device" does not preclude the use of more than one unit or device. The expression "a number of" means "at least one".

**Claims**

1. A multi-task machine learning network (1) comprising a plurality of sub-networks (N1, N2, N3, N4), each sub-network (N1, N2, N3, N4) having a number of output nodes (ON) and input nodes (IN), wherein there is a general input (GI) providing input data (D) and the input nodes (IN) of at least a first sub-network (N1) and a second sub-network (N2) are connected to this general input (GI), and wherein an output-node (ON) of the first sub-network (N1) is connected with an input-node (IN) of the second sub-network (N2).

2. The multi-task machine learning network according to claim 1, comprising a third sub-network (N3), wherein the input node (IN) of the third sub-network (N3) is connected to the general input (GI), and wherein an output-node (ON) of the first sub-network (N1) and/or the second sub-network (N2) is connected with an input-node (IN) of the third sub-network (N3) .

3. The multi-task machine learning network according to claim 2, comprising a fourth sub-network (N4), wherein the input node (IN) of the fourth sub-network (N4) is connected to the general input (GI), and wherein an output-node (ON) of the first sub-network (N1) and/or the second sub-network (N2) and/or the third sub-network (N3) is connected with an input-node (IN) of the fourth sub-network (N4).

4. The multi-task machine learning network according to one of the preceding claims, wherein at least a number of the sub-networks (N1, N2, N3, N4) is designed for image analytics, treatment/response, survival prediction, or diagnostics, preferably wherein the general input (GI) is designed for receiving image data (D) and/or patient data as input data (D).

5. The multi-task machine learning network according to one of the preceding claims, adapted for processing images in mammography as input data (D), especially for scoring mammographic breast density, preferably wherein

   - the first sub-network (N1) is designed to segment a breast from background,
   - the second sub-network (N2) is designed to segment compressed and periphery area,
   - especially a third sub-network (N3) is designed to segment important landmarks, especially pectoralis, nipple, and/or inframammary fold,
   - especially a fourth sub-network (N4) is designed to segment fibro-glandular tissue in a mammogram,
   - especially a further sub-network is designed to assign a breast density score (S) which uses the outputs of a number, especially of all, previous sub-networks (N1, N2, N3, N4).

6. The multi-task machine learning network according to one of the preceding claims, adapted for processing an input image of a catheter inside a body as input data (D) and localizing a catheter tip, preferably wherein

   - the first sub-network (N1) is designed to segment a catheter course (C),
   - the second sub-network (N2) is designed to exploit the segmented catheter course (C) and the input image to segment the catheter tip (T).

7. The multi-task machine learning network according to one of the preceding claims, wherein the complexity of tasks solved by the sub-networks (N1, N2, N3, N4) is different and the sub-networks (N1, N2, N3, N4) are arranged such that the first sub-network (N1) solves the least complex task and the second sub-network (N2) solves the task with the second least complexity, preferably wherein following sub-networks (N3, N4) are arranged in ascending order regarding their complexity.

8. A method for training a multi-task machine learning network (1) according to one of the preceding claims with a plurality of training datasets (TD), the method comprising the steps:

- training the first sub-network (N1) by inputting a first training dataset (TD) into the first sub-network (N1) and adapting parameters of the first sub-network (N1) according to a ground truth of the first training dataset (TD),
- training the second sub-network (N2) by inputting the first training dataset (TD) and an output of the first sub-network (N1) into the second sub-network (N2) and adapting parameters of the second sub-network (N2) according to a ground truth of the first training dataset (TD),

wherein the training steps are performed simultaneously in the course of multi-task machine learning,

- repeating the training steps with other training datasets (TD) .

9.  The method according to claim 8, comprising the additional step:

- training a third sub-network (N3) by inputting the first training dataset (TD) and an output of the first sub-network (N1) and/or the second sub-network (N2) into the third sub-network (N3) and adapting parameters of the third sub-network (N3) according to a ground truth of the first training dataset (TD),

and preferably

- training a fourth sub-network (N4) by inputting the first training dataset (TD) and an output of the first sub-network (N1) and/or the second sub-network (N2) and/or the third sub-network (N3) into the fourth sub-network (N4) and adapting parameters of the fourth sub-network (N4) according to a ground truth of the first training dataset (TD).

10. The method according to claim 8 or 9, wherein sub-networks (N1, N2, N3, N4) are trained by using imaging data, non-imaging data or a combination of imaging data and non-imaging data as training datasets (TD), especially mammography data or images of a catheter inside a body.

11. The method according to one of claims 8 to 10, wherein the training is based on a loss function of the form $L_{total} = L_1(W_1)+L_2(W_1, W_2)$, with sets of network parameters W and segmentation losses L,

preferably based on a loss function of the form
$L_{total} = L_1(W_1)+L_2(W_1, W_2)+L_3(W_1, W_2, W_3)$ for three sub-networks (N1, N2, N3, N4),
especially based on a loss function of the
form $L_{total} = L_1(W_1)+L_2(W_1, W_2)+L_3(W_1, W_2, W_3)+L_4(W_1, W_2, W_3, W_4)$ for four sub-networks (N1, N2, N3, N4).

12. A medical system comprising a multi-task machine learning network (1) according to one of claims 1 to 7 trained by a method according to one of claims 8 to 11.

13. The medical system according to claim 12, being an X-ray system and/or a tomography system, especially a mammography system, or an MRI-System or an ultrasound system or a diagnosis system.

14. A computer program product comprising instructions which, when the program is executed by a computer, cause the computer to carry out the steps of the method of any of claims 8 to 11.

15. A computer-readable storage medium comprising instructions which, when executed by a computer, cause the computer to carry out the steps of the method of any of claims 8 to 11.

FIG 1 PRIOR ART

FIG 2 PRIOR ART

## FIG 3

## FIG 4

FIG 5

FIG 6

Europäisches
Patentamt

European
Patent Office

Office européen
des brevets

# EUROPEAN SEARCH REPORT

**Application Number**

EP 22 19 5822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG JUN ET AL: "Hierarchical Convolutional Neural Networks for Segmentation of Breast Tumors in MRI With Application to Radiogenomics", IEEE TRANSACTIONS ON MEDICAL IMAGING, IEEE, USA, vol. 38, no. 2, 1 February 2019 (2019-02-01), pages 435-447, XP011707501, ISSN: 0278-0062, DOI: 10.1109/TMI.2018.2865671 [retrieved on 2019-01-31] * page 435 – page 441 * | 1-15 | INV. G06N3/045 G06N3/048 G06N3/09 |
| X | WU YU-DONG ET AL: "Automatic Guidewire Tip Segmentation in 2D X-ray Fluoroscopy Using Convolution Neural Networks", 2018 INTERNATIONAL JOINT CONFERENCE ON NEURAL NETWORKS (IJCNN), IEEE, 8 July 2018 (2018-07-08), pages 1-7, XP033419147, DOI: 10.1109/IJCNN.2018.8489337 [retrieved on 2018-10-10] * page 1 – page 4 * | 1-15 | |
| X | Wang Yunzhi: "DEVELOPING MEDICAL IMAGE SEGMENTATION AND COMPUTER-AIDED DIAGNOSIS SYSTEMS USING DEEP NEURAL NETWORKS", Dissertation, 14 December 2018 (2018-12-14), XP055886404, UNIVERSITY OF OKLAHOMA GRADUATE COLLEGE Retrieved from the Internet: URL:https://shareok.org/handle/11244/316299 [retrieved on 2022-02-02] * page 88 – page 94 * * page 45 * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 1 February 2023 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG et al.** *Medical Image Segmentation Using Deep Learning: A survey, https://arxiv.org/pdf/2009.13120. pdf*
- **MINAEE et al.** *Image Segmentation Using Deep Learning: A Survey, https://arxiv.org/pdf/2001.05566.pdf*
- **RUDER.** *An Overview of Multi-Task Learning in Deep Neural Networks, https://arxiv.org/abs/1706.05098*
- **LIN et al.** *A Closer Look at Loss Weighting in Multitask Learning, https://arxiv.org/pdf/2111.10603.pdf*
- **VANDENHENDE et al.** *Multi-Task Learning for Dense Prediction Tasks: A Survey, https://arxiv.org/abs/2004.13379*